# EUROPEAN PATENT SPECIFICATION

(11) **EP 3 358 271 B1**
(45) Date of publication and mention of the grant of the patent: **13.01.2021**
(21) Application number: 18460007.0
(22) Date of filing: 31.01.2018
(51) Int. Cl.: F24H 1/20, F24H 1/18, F24H 9/18, F24H 9/00, F28D 1/047, F28D 7/02, F28D 7/12, F28D 20/00, F28F 9/013, F16L 9/19

(54) **WATER HEATER AND A PIPE COIL FOR A HEAT EXCHANGER, IN PARTICULAR AN EXCHANGER INTENDED FOR THAT SPECIFIC WATER HEATER**
WASSERERHITZER UND ROHRSCHLANGE FÜR EINEN WÄRMETAUSCHER, INSBESONDERE EIN TAUSCHER FÜR DIESEN SPEZIFISCHEN WASSERERHITZER
CHAUFFE-EAU ET TUBE EN SERPENTIN POUR UN ÉCHANGEUR DE CHALEUR, EN PARTICULIER UN ÉCHANGEUR DESTINÉ À CE CHAUFFE-EAU SPÉCIFIQUE

(30) Priority: 07.02.2017 PL 42046717
(43) Date of publication of application: 08.08.2018
(73) Proprietor: AIC Spólka Akcyjna, 81-577 Gdynia (PL)
(72) Inventor: Siemienczuk, Tomasz, 80-351 Gdansk (PL); Pacholski, Adam, 81-603 Gdynia (PL); Szczepanski, Krzysztof, 83-110 Tczew (PL); Kowalski, Tomasz, 76-200 Slupsk (PL); Saj, Grzegorz, 81-198 Mosty (PL)
(74) Representative: Pomianek, Grazyna

(56) References cited:
- EP-A1- 0 972 994
- EP-A2- 2 189 737
- WO-A2-2011/008921
- DE-A1- 19 624 937
- FR-A1- 2 913 763
- JP-A- 2003 156 294
- US-A1- 2011 203 766
- US-A1- 2014 262 136

## Description

The invention concerns a water heater, particularly integrated in central heating installation, designated especially for household use.

Known from patent document DE 19526862 is a device for the heating of domestic water, consisting of a domestic water tank fitted with an external jacket and of a countercurrent heat exchanger featuring two flow ducts, where one of the ducts is intended for the heating medium and the other for the domestic water, and where the heating medium duct is formed between the external jacket of the domestic water tank and its outer surface, while the domestic water duct takes the form of a pipe coil placed inside the said heating medium duct. The domestic water heated up in the pipe coil flows into the tank from which it is drawn for use.

Known from patent document DE 1679766 is a water heater containing a water tank inside which there is a pipe positioned axially, where the pipe is open at the bottom and closed with a lid featuring an opening at the top, so that there is a ring-shaped space formed between the said pipe and the wall of the water tank, where running across that space is a pipe coil in which the heating medium flows, the coil wound spirally around the said pipe. The area of the cross-section of the opening must not be larger than half the area of the cross-section of the said ring. Cold water is supplied to the water tank via the supply pipe to the bottom part of the tank, from where it flows in countercurrent with respect to the flow of the working agent in the pipe coil.

Known from patent document US 2011/203766 A 1 is a conduit for use in a geothermal heating and cooling system wherein said conduit comprises two or more pipes, wherein further, said two or more pipes comprising said conduit are twisted together.

Known from patent document JP 2003 156294 A is a duplex tube heat exchanger wherein a heat exchanger area is increased by making the inner pipes in a spiral shape of a plurality of numbers, and the heat transfer performance is increased by promoting turbulence of water flowing in the secondary refrigerant passage of the outer pipe and the inner pipes.

Known from patent document EP 0 972 994 A1 is a device for heating sanitary water having a chamber for heating water bounded by walls in which chamber a container for sanitary water is located. In the heating chamber a pipe spiral having a plurality of windings is provided which is connected to the container. The sanitary water pipe comprises two spirally wound pipe sections, wherein these pipe sections are arranged concentrically.

Know from patent document EP 2 189 737 A2 is a condenser having an external cylinder in which a coolant e.g. water, circulates, for surrounding a tube, where ends of the tube are connected to refrigerant inlet pipe and refrigerant outlet pipes. The tube is rolled around a central concentric cylinder in which the coolant circulates, where the coolant is heated by heat exchange between cold water traversing the external cylinder and a refrigerant circulating countercurrently in the tube.

Know from patent document FR 2 913 763 A1 is a condenser having an external cylinder enclosing tubes with ends that are connected to refrigerant intake and outlet pipes. The tubes are rolled around a central cylinder in which a coolant is circulated against a refrigerant. The tubes are connected with each other by straps for forming a tube bundle spirally rolled around the central cylinder, where the tube bundle is twisted.

The purpose of the invention is to develop a structure of a water heater which would improve heat exchange and could be used in low-temperature heating systems, especially in systems of air source heat pumps, and to develop a structure of a pipe coil which could be applied especially in that specific water heater.

A water heater containing a water tank featuring an external jacket and a pipe coil wound spirally around the water tank in the space between the said external jacket and a wall of the water tank, the water tank is closed at the bottom with a bottom wall fitted with an outlet stub pipe for the heated water, and open, at least partially, at the top providing access to the space between the water tank and the water tank external jacket, where the external jacket is fitted at the bottom with an inlet stub pipe for cold water, while the pipe coil is made up of at least two pipes twisted together spirally and wound around the said water tank, where the pipes feature collectors at their both ends, i.e. at the inlets and outlets, and where a working agent flows inside the pipes, while the outlet from the pipe coil for the working agent is positioned at the bottom of the external jacket of the water tank according to this invention is characterised in that the inlet end through which the working agent flows into the pipe coil pierces the water tank bottom.

Preferably, the water tank is entirely open at the top providing access to the space between the external jacket of the water tank and the water tank.

Preferably, the pipes of the pipe coil are placed in separators which guarantee some distance between the pipes, where the separators are arranged along the pipe coil, and where preferably the separator takes the form of an open ring with ribs arranged radially so that formed between the ribs and inside the ring are sockets to accommodate the pipes of the pipe coil. Preferably, the pipes of the pipe coil anchored in the sockets between the separator ribs are wound spirally around the pipe anchored in the socket in the centre of the separator ring and twisted together.

The structure of the water heater ensures intensified heat exchange in low temperature heating systems, especially in systems of air source heat pumps, and the separator structure enables replacement of any of the coil pipes.

Further benefits and advantages of the present invention will become apparent after a careful reading of the detailed description with appropriate reference to the accompanying drawings. In the drawings:
Fig. 1 shows an embodiment of the invention, a heat exchanger with the water tank entirely open at the top providing access to the space between the water tank and the external jacket of the water tank, and with the working agent inlet fitted in the water tank bottom;
Fig. 2 depicts a heat exchanger with the water tank entirely open at the top providing access to the space between the water tank and the external jacket of the water tank, and with the working agent inlet fitted at the top of the external jacket of the water tank;
Fig. 3 shows a heat exchanger with a water tank partially open at the top, providing access to the space between the water tank and the external jacket of the water tank, and with a working agent inlet fitted at the top of the external jacket of the water tank;
Fig. 4 depicts a separator of the pipe coil;
Fig 5 presents the pipe coil with separators;
Fig. 6 depicts a fragment of the pipe coil as shown on Fig. 5.

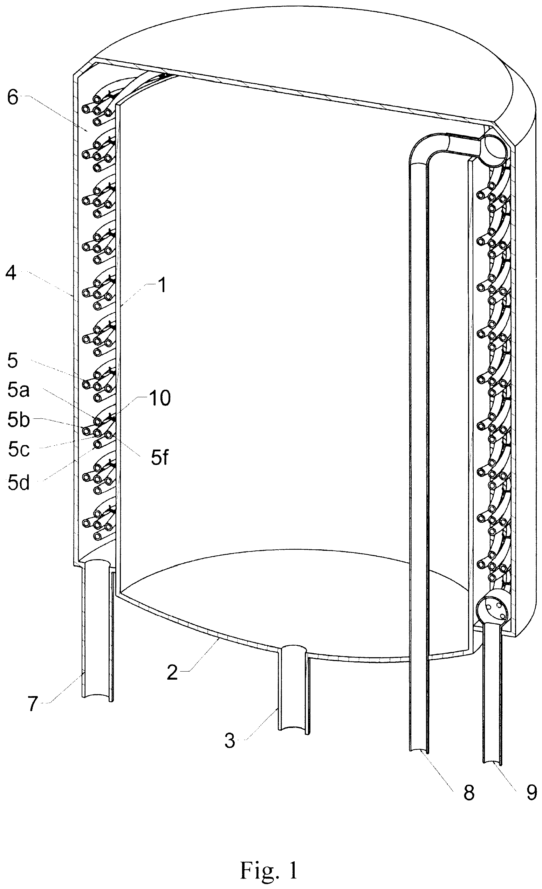

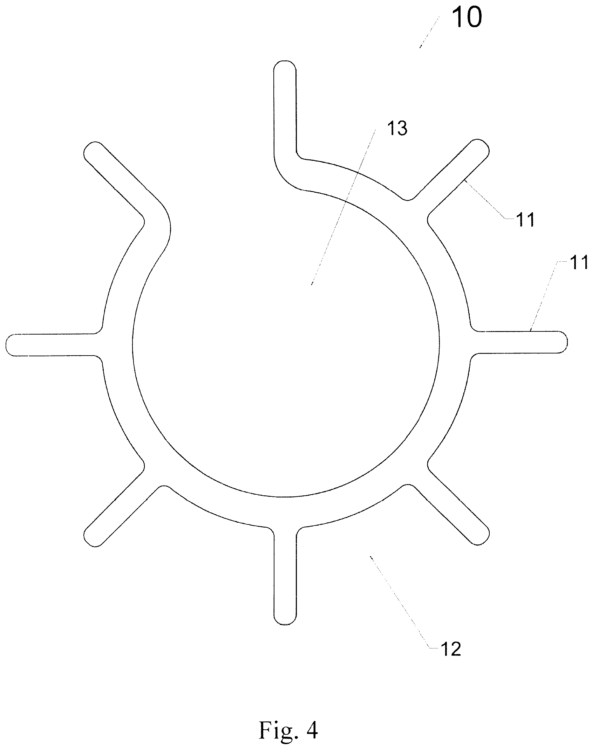

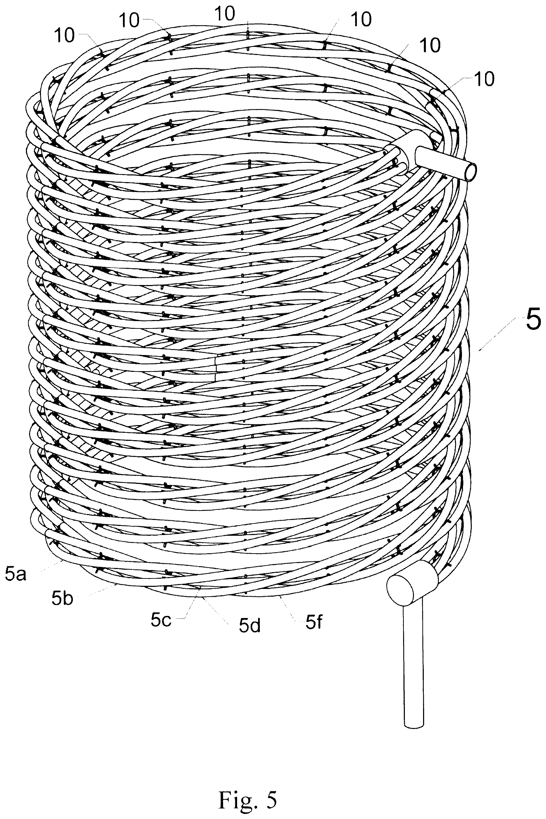

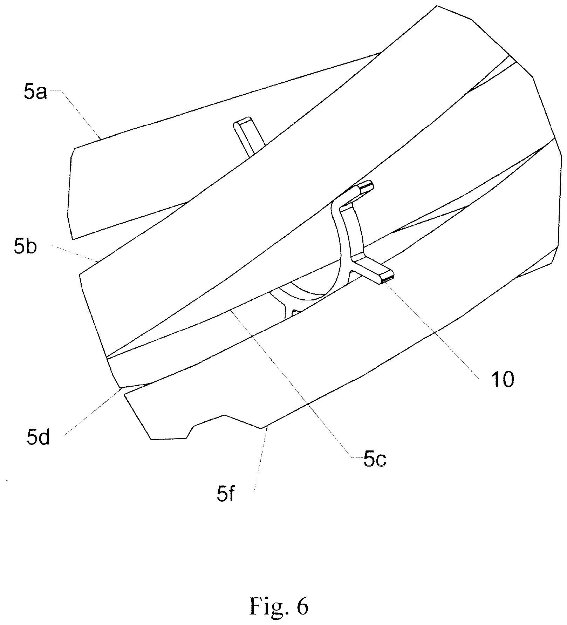

In the exemplary embodiment of the invention (Fig. 1) the water heater contains a water tank 1 fitted with an external jacket 4 and a pipe coil 5 wound spirally around the water tank 1 in the space 6 between the said external jacket 4 and a wall of the water tank 1. The water tank 1 is closed at the bottom with the bottom wall 2 fitted with an outlet stub pipe 3 for the heated water, and entirely open at the top providing access to the space 6 between the water tank 1 and the external jacket 4 of the water tank 1. At the bottom, the external jacket 4 is fitted with the inlet stub pipe 7 for cold water. The pipe coil 5 is made up of five pipes 5a, 5b, 5c, 5d, 5f placed in separators 10 which guarantee some distance between these pipes, where the separators are arranged along the pipe coil 5 (Fig.5). Each separator 10 is formed into an open ring with ribs 11 arranged radially, so that formed between the ribs 11 and in the centre of the ring are sockets 12, 13 to accommodate the pipes of the coil 5 (Fig. 4). The pipes 5a, 5b, 5d, 5f of the pipe coil 5 are anchored in the sockets 12 between ribs 11 of the separator 10, and pipe 5c is anchored in the centre of the ring in socket 13 of the separator 10 (Fig. 6). The pipes 5a, 5b, 5d, 5f are wound spirally around pipe 5c, twisted together and wound around the water tank 1, with collectors fitted at their both ends. Flowing in pipes 5a, 5b, 5c, 5d of the pipe coil 5 is the working agent. The outlet 9 of the working agent from the pipe coil 5 is positioned at the bottom of the external jacket 4 of the water tank 1, whereas the inlet 8 of the working agent to the pipe coil 5 pierces through the bottom 2 of the water tank 1, so that a fragment of the pipe coil 5 runs inside the water tank 1 (Fig. 1).

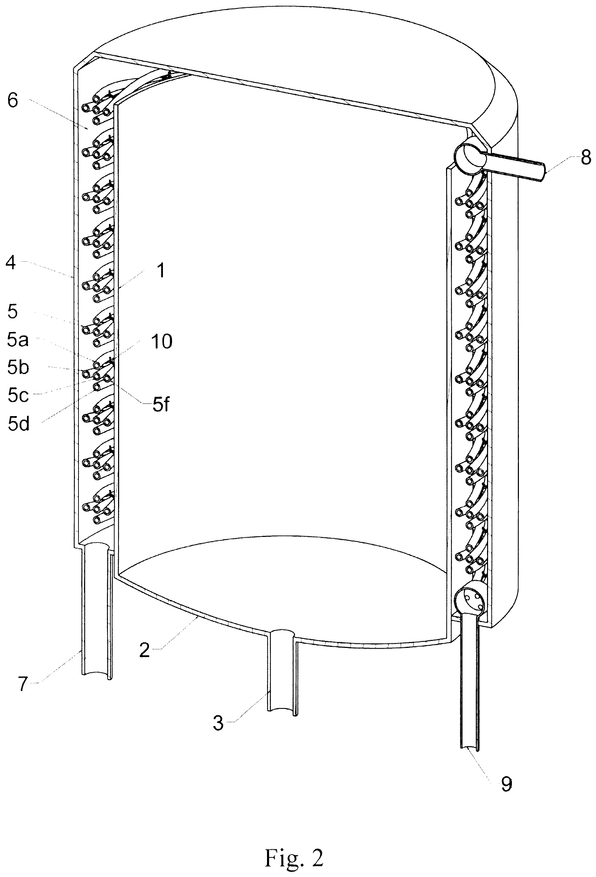

In an exemplary embodiment not falling within the scope of the invention (Fig. 2), the heat exchanger differs from that described in example one in that the inlet 8 of the working agent to the pipe coil 5 is positioned at the top of the external jacket 4 of the water tank 1.

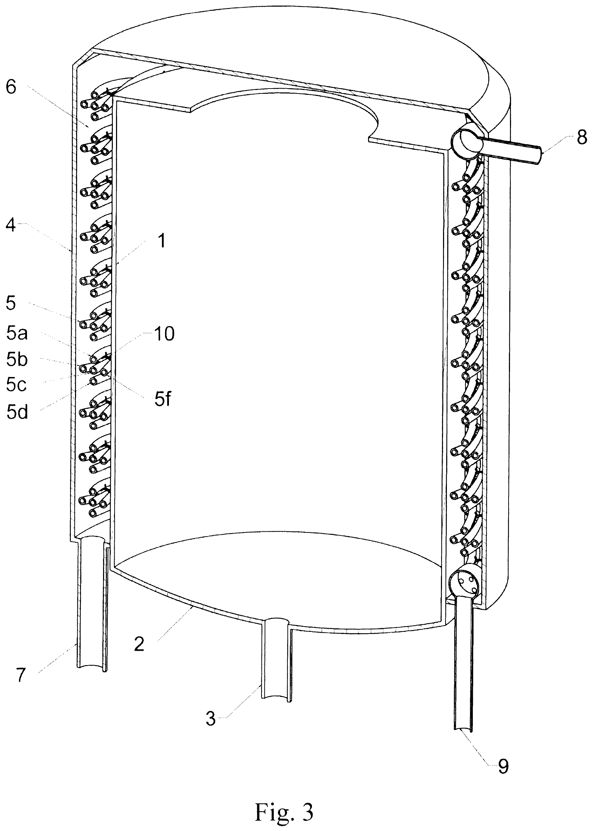

In another exemplary embodiment not falling within the scope of the invention (Fig. 3), the heat exchanger differs from the exchanger described in example two in that the water tank 1 is partially open at the top providing access to the space 6 between the water tank 1 and the external jacket 4 of the water tank 1.

Supplied to the space 6 between the water tank 1 and the external jacket 4 of the water tank 1 through the inlet stub pipe 7 fitted in the external jacket 4 of the water tank 1 is cold water which heats up when flowing upwards around the pipe coil 5, whereupon it gets into the water tank from which it is drawn through the outlet stub pipe 3 fitted in the bottom of the water tank 1, while directed to the inlet sub pipe 8 of the pipe coil 5 is the heated working agent which flows inside the pipe coil 5 in countercurrent with respect to the water flowing in the space 6 between the water tank 1 and the external jacket 4 of the water tank 1 and leaves the pipe coil 5 through the outlet stub pipe 9.

## Claims

1. A water heater containing a water tank featuring an external jacket and a pipe coil wound spirally around the water tank in the space between the said external jacket and a wall of the water tank, the water tank (1) is closed at the bottom with a bottom wall (2) fitted with an outlet stub pipe (3) for the heated water, and open, at least partially, at the top providing access to the space (6) between the water tank (1) and the external jacket (4) of the water tank (1), where the external jacket (4) is fitted at the bottom with an inlet stub pipe (7) for cold water, while the pipe coil (5) is made up of at least two pipes twisted together spirally and wound around the said water tank (1), where the pipes feature collectors at their both ends, i.e. at the inlet (8) and outlet (9), and where a working agent flows inside the pipes, while the outlet (9) from the pipe coil (5) for the working agent is positioned at the bottom of the external jacket (4) of the water tank (1), wherein the inlet end (8) through which the working agent flows into the pipe coil (5) pierces the bottom (2) of the water tank (1).

2. The water heater according to Claim 1, **characterized in that** the water tank (1) is entirely open at the top providing access to the space (6) between the external jacket (4) of the water tank (1) and the water tank (1).

3. The water heater according to Claims 1 or 2, **characterized in that** the pipes of the pipe coil (5) are placed in separators which guarantee some distance between the pipes, where the separators are arranged along the pipe coil (5).

4. The water heater according to Claim 3, **characterised in that** the separators (10) take the form of an open ring with ribs (11) arranged radially so that formed between the ribs (11) and inside the ring are sockets (12, 13) to accommodate the pipes of the pipe coil (5).

5. The water heater according to Claim 4, **characterized in that** the pipes of the pipe coil (5) anchored in the sockets (12) between the ribs (11) of the separators (10) are wound spirally around the pipe anchored in the socket (13) in the centre of the separator (10) ring and twisted together.

## Patentansprüche

1. Wassererhitzer, der aus einem Wasserspeicher mit einem außenliegenden Mantel und einem auf dem Wasserspeicher in dem Raum zwischen dem genannten Außenmantel und der Wasserspeicherwand spiralförmig gewickelten Schlangenrohr besteht, wobei der Wasserspeicher unten (1) mit einem Boden (2) mit einem Auslaufstutzen (3) für Warm wasser abgeschlossen ist und oben zumindest teilweise zum Raum (6) zwischen dem Wasserspeicher (1) und dem Außenmantel (4) des Wasserspeichers (1) hin geöffnet ist, wobei der Außenmantel (4) unten mit einem Kaltwasser-Zulaufstutzen (7) ausgestattet ist und das Schlangenrohr (5) aus mindestens zwei spiralförmig zueinander verlaufenden und auf dem vorgenannten Wasserspeicher (1) aufgewickelten Rohren besteht, wobei diese Rohre an den beiden Enden, d.h. am Einlauf (8) und am Auslauf (9) zusammen geführt werden und in diesen Rohren fließt das Betriebsmedium, wobei der Auslauf (9) des Mediums aus dem Schlangenrohr (5) am Boden des Außenmantels (4) des Wasserspeichers (1) angeordnet ist, in dem der Einlauf (8) des Mediums in das Schlangenrohr (5) durch den Boden (2) des Wasserspeichers (1) verläuft.

2. Wassererhitzer nach dem Anspruch 1, **dadurch gekennzeichnet, dass** der Wasserspeicher (1) oben vollständig in den Raum (6) zwischen dem Außenmantel (4) des Wasserspeichers (1) und dem Wasserspeicher (1) geöffnet ist.

3. Wassererhitzer nach Anspruch 1 oder 2, **dadurch gekennzeichnet, dass** die Schlangenrohre (5) in Abstandshaltern angeordnet sind, die Abstände zwischen diesen Rohren generieren und die entlang des Schlangenrohrs (5) angeordnet sind.

4. Wassererhitzer nach Anspruch 3, **dadurch gekennzeichnet, dass** die Abstandhalter (10) in Form eines offenen Ringes mit: radial angeordneten Rippen (11) ausgeführt sind, wobei die so angeordnet sind, dass zwischen den Rippen (11) und in der Mitte des Rings Aufnahmen (12, 13) für die Schlangenrohre (5) herausgebildet sind.

5. Wassererhitzer nach Anspruch 4, **dadurch gekennzeichnet, dass** die in den Aufnahmen (12) zwischen den Rippen (11) der Abstandhalter (10) liegenden Schlangenrohre (5) in Bezug auf das in der Aufnahme (13) in der Mitte des Rings (10) liegende Rohr, sowie auch in Bezug zueinander spiralförmig verlaufen.

## Revendications

1. Chauffe-eau comprenant un réservoir d'eau pourvu d'une chemise extérieure et d'un serpentin enroulé en spirale sur le réservoir d'eau dans l'espace entre ladite chemise extérieure et la paroi du réservoir d'eau, le réservoir d'eau (1) est fermé en bas par un fond (2) équipé d'une sortie d'eau chaude (3) et en haut, il est au moins partiellement ouvert sur l'espace (6) entre le réservoir d'eau (1) et la chemise extérieure (4) du réservoir d'eau (1), ladite chemise extérieure (4) étant pourvue d'une connecteur d'entrée d'eau froide (7) au fond, et le serpentin (5) est constitué d'au moins deux tuyaux enroulés en spirale l'un par rapport à l'autre et enroulés sur ledit réservoir d'eau (1), lesdits tuyaux formant des collecteurs aux deux extrémités, à savoir à l'extrémité d'entrée (8) et de sortie (9), lesdits tuyaux transportant le fluide de travail, l'extrémité de sortie (9) du fluide de travail du serpentin (5) étant située au bas de la chemise extérieure (4) du réservoir d'eau (1), dans lequel l'extrémité d'entrée (8) du fluide de travail vers le serpentin (5) passe à travers le fond (2) du réservoir d'eau (1).

2. Chauffe-eau selon la revendication 1, **caractérisé en ce que** le réservoir d'eau (1) est complètement ouvert en haut sur l'espace (6) entre la chemise extérieure (4) du réservoir d'eau (1) et le réservoir d'eau (1).

3. Chauffe-eau selon la revendication 1 ou 2, **caractérisé en ce que** les tuyaux du serpentin (5) sont situés dans des séparateurs qui assurent la distance entre ces tuyaux, lesdits séparateurs sont disposés le long du serpentin (5).

4. Chauffe-eau selon la revendication 3, **caractérisé en ce que** les séparateurs (10) ont une forme d'un anneau ouvert avec des nervures (11) situés radialement de sorte que, entre les nervures (11) et au milieu de l'anneau, des logements (12, 13) pour les tuyaux du serpentin (5) sont formés.

5. Chauffe-eau selon la revendication 4, **caractérisé en ce que** les tuyaux du serpentin (5) situés dans les logements (12) entre les nervures (11) des séparateurs (10) sont enroulés en spirale par rapport ay tuyau situé dans le logement (13) au milieu de l'anneau du séparateur (10) et l'un par rapport à l'autre.
